Europäisches Patentamt

European Patent Office

Office européen des brevets

(19)

(11) **EP 0 717 557 B1**

(12) **EUROPEAN PATENT SPECIFICATION**

(45) Date of publication and mention
of the grant of the patent:
**08.09.1999 Bulletin 1999/36**

(51) Int Cl.⁶: **H04N 5/14**

(21) Application number: **95118730.1**

(22) Date of filing: **29.11.1995**

(54) **Method and arrangement to emphasize edges appearing in a video picture**

Vorrichtung und Gerät zum Hervorheben der Umrisse in einen Videobild

Procédé et dispositif d'accentuation de flancs dans une image vidéo

(84) Designated Contracting States:
**DE FR GB IT**

(30) Priority: **15.12.1994 FI 945910**

(43) Date of publication of application:
**19.06.1996 Bulletin 1996/25**

(73) Proprietor: **NOKIA TECHNOLOGY GmbH
75175 Pforzheim (DE)**

(72) Inventors:
• **Vehviläinen, Markku
FIN-33720 Tampere (FI)**

• **Salonen, Jouni
FIN-33820 Tampere (FI)**

(56) References cited:
**EP-A- 0 339 755**

• **PATENT ABSTRACTS OF JAPAN vol. 017, no. 169 (E-1344), 31 March 1993 & JP-A-04 326674 (MATSUSHITA ELECTRIC IND CO LTD), 16 November 1992,**
• **PATENT ABSTRACTS OF JAPAN vol. 017, no. 642 (E-1466), 29 November 1993 & JP-A-05 207271 (MATSUSHITA ELECTRIC IND CO LTD), 13 August 1993,**

## Description

The invention relates to a method and an arrangement to emphasize edges appearing in a video picture. The method and arrangement particularly relate to digital processing of a video signal in a television receiver in order to improve the quality of the picture. Edge emphasizing aims to improve the sharpness of the picture, as perceived by the viewer. Edge emphasizing according to the invention can also be used in conjunction with edge and motion adaptive noise reduction for a video picture.

When the human eye is looking at a video picture, the sharpness effect created by the eye depends primarily on the luminance information and on how well the resolution is utilized in the display of the picture. The sharpness effect particularly depends on how clear the edges in the picture are, i.e. how radically the luminance is changed at the edge locations. It is not always possible to sufficiently utilize the resolution in order to produce a picture that appears sharp: the picture material, old movies, for example, may be unsharp and also flat and noisy. The object filmed and the filming conditions may also be such that the luminance differences in the picture are small, whereby resolution cannot be utilized, and the sharpness effect is poor. Furthermore, sharpness of a video picture may be affected by video signal processing, such as noise reduction, which tends to soften the picture and flatten the edges in it. Sharpness of the picture and particularly the sharpness effect of the picture, as perceived by the viewer, can be improved by emphasizing the edges appearing in the picture, i.e. by increasing the luminance differences at the edge locations of the picture.

In the frequency domain, most of the energy of the edges appearing in a video picture is concentrated in the medium frequency. Therefore, the most effective way to emphasize the edges and sharpen the picture is to emphasize medium frequency components. This edge emphasizing method is in the art called "peaking". In digital processing of a video signal in the frequency domain, implementing said peaking means bandpass filtering with which the medium frequencies are emphasized relative to the other frequencies. Commonly, peaking is carried out as uni-dimensional filtering with horizontal or vertical peaking or as two-dimensional filtering combining the two or using a two-dimensional filter.

In horizontal peaking a FIR filter may be used. It has as inputs a group of successive samples of a line which are obtained simply by taking a video signal to consecutive pixel delays. Each input sample is weighted by a certain coefficient and the weighted coefficients are summed in an adder which produces the filter output signal at its output. The pixel delays thus constitute a filtering window that comprises successive luminance samples of a line. The properties of the filter can be altered by changing the weighting coefficients. Vertical peaking is analogous to horizontal peaking with the exception that the one-pixel delays are substituted by one-line delays, thus giving the window a vertical dimension. The height of the filter window may be three samples, for example, and the properties of the filter can again be altered by changing the coefficients of the FIR filter. In two-dimensional filtering, the filter window may be e.g. a 3x3 window.

Peaking is often done in the horizontal dimension only, because horizontal bandpass filtering does not emphasize line flicker and does not require the use of line memories. A disadvantage is that edge emphasizing is mainly directed to vertical edges; and when using vertical peaking only, the disadvantage remains, as the emphasizing is mainly directed to horizontal edges. The unevenness of edge emphasizing will not be removed by combining horizontal and vertical peaking, because then it will be the diagonal edges that are particularly emphasized, as they are emphasized both horizontally and vertically. Neither will a 2-dimensional peaking filter produce even edge emphasizing for edges of different directions. The stronger the filtering, which is set with filtering parameters, the more obvious is the unevenness of edge emphasizing, i.e. the dependence of the intensity of emphasis on edge direction, and therefore, in this kind of peaking, limitations must be set on the filtering parameters.

If filtering that emphasizes the medium frequencies is applied to the whole picture area, another problem will be posed by the fact that the noise included in the video signal is emphasized at the same time. This problem can be circumvented by restricting the peaking to edge locations having high amplitudes and preventing emphasizing of dark areas.

As was stated above, problems related to conventional edge emphasizing methods include uneven emphasizing of edges depending on the edge direction and the conflict between edge emphasizing and noise reduction, for example. An arrangement disclosed in patent application FI-940532 by the applicant attempts to solve the latter problem. In that application it is also proposed that edge detection be utilized in peaking and that peaking be performed on the basis of that detection at edge locations only and according to the edge information provided. This method avoids unnecessary emphasizing of noise at locations where there is no edge. Another solution for edge emphasizing is known from Patent Abstracts of Japan, vol. 017, no 169 (E-1344). This document describes a method for processing a digital video signal comprising samples corresponding to pixels to emphasize edges appearing in a video picture corresponding to the video signal, said method includes stages in which:

several unidimensional edge emphasizing algorithms for different directions are reserved for signal processing so that they represent substantially all possible directions,
edge occurrence is detected at each sample and when an edge occurs, its direction is detected,
when an edge occurs a unidimensional edge emphasizing algorithm is selected the direction of which is closest to the perpendicular direction of the edge, and edge emphasizing is performed with the algorithm selected.

Edge and motion adaptive noise reduction can also be incorporated in edge emphasizing according to the present invention, the principle then being that if there is neither edge nor motion, noise can be effectively reduced using spatiotemporal averaging, for example.

An object of the invention is to provide an edge emphasizing method avoiding the disadvantages of prior art methods, unevenness of edge emphasizing and emphasizing of noise in conjunction with edge emphasizing. Another object of the invention is to provide a simple edge emphasizing method that produces practically the best possible edge emphasizing result and, if there is neither edge or motion, performs noise reduction.

These objects are achieved with an edge emphasizing method according to claim 1. It is characteristic of this edge emphasizing method according to the invention that it utilizes an edge detection algorithm indicating the location and direction of an edge, that edge emphasizing is used only at locations which are detected by the edge detection algorithm as edge locations, and that edge emphasizing is performed as unidimensional filtering substantially perpendicular to the detected edge direction and, if there is neither edge or motion, performs noise reduction. The preferred embodiment of the edge emphasizing filter is a unidimensional bandpass type FIR filter.

The edge emphasizing arrangement according to the invention is characterized by what is expressed in claim 6. The arrangement includes an edge detector which at each sample detects the occurrence of an edge and the direction of the edge when it occurs, and it is characterized in that it further includes for different directions a set of unidimensional edge emphasizing filters which represent substantially all possible directions, and a means for selecting an edge emphasizing filter as a response to a control signal from the edge detection means corresponding to the occurrence and direction of an edge, so that when an edge occurs, a filter is selected that has a direction which is closest to the perpendicular direction of the detected edge, and the filtering is performed using that filter.

The principle of the edge and motion adaptive noise reduction incorporated in the edge emphasizing according to the invention is that if there occurs neither edge nor motion, noise is effectively reduced using spatiotemporal averaging. In the method according to the invention, motion detection is then also performed, and if neither edge nor motion is detected, noise reduction is performed. A motion detection block and noise reduction block are added to the arrangement according to the invention, and the signal is taken through the noise reduction block if neither edge nor motion is detected. In principle, it is possible to reduce noise also in an edge area by averaging the picture area in the direction of the edge. Then, in the case that an edge but no motion is detected, noise is reduced prior to performing edge emphasizing according to the invention using a noise reduction algorithm in the direction of the edge detected. To that end, a set of several unidimensional noise reduction algorithms for different directions is reserved for signal processing. Such noise reduction levels off the strongest noise spots in the edge area and prevents them from being further emphasized in edge emphasizing.

The edge emphasizing method and arrangement according to the invention have the advantage that restrictions to the use of edge emphasizing can be considerably reduced or completely removed. Emphasizing may also be performed for weak edges and in low-luminance areas. This way, the dynamics of edge emphasizing can be improved. When edge emphasizing is performed unidimensional and with filtering substantially perpendicular to the direction of the edge, its effect is substantially independent of the edge direction and, therefore, optimal edge emphasizing parameters can be used.

The invention will be now described in more detail with reference to the accompanying drawing, in which:

Fig. 1 shows the basic frequency response of a prior-art edge emphasizing filter implemented with two unidimensional filters,

Fig. 2 shows in principle the ideal frequency response of an edge emphasizing filter, which substantially corresponds to the frequency response achieved with the method and arrangement according to the invention,

Fig. 3 is a block diagram illustrating schematically an embodiment of the edge emphasizing arrangement according to the invention,

Fig. 4 is a block diagram illustrating schematically an embodiment in which motion detection and edge and motion adaptive noise reduction are incorporated in the edge emphasizing arrangement according to the invention, and

Fig. 5 illustrates schematically the operating environment of an embodiment of a noise reduction algorithm intended to be used in the embodiment depicted in Fig. 4.

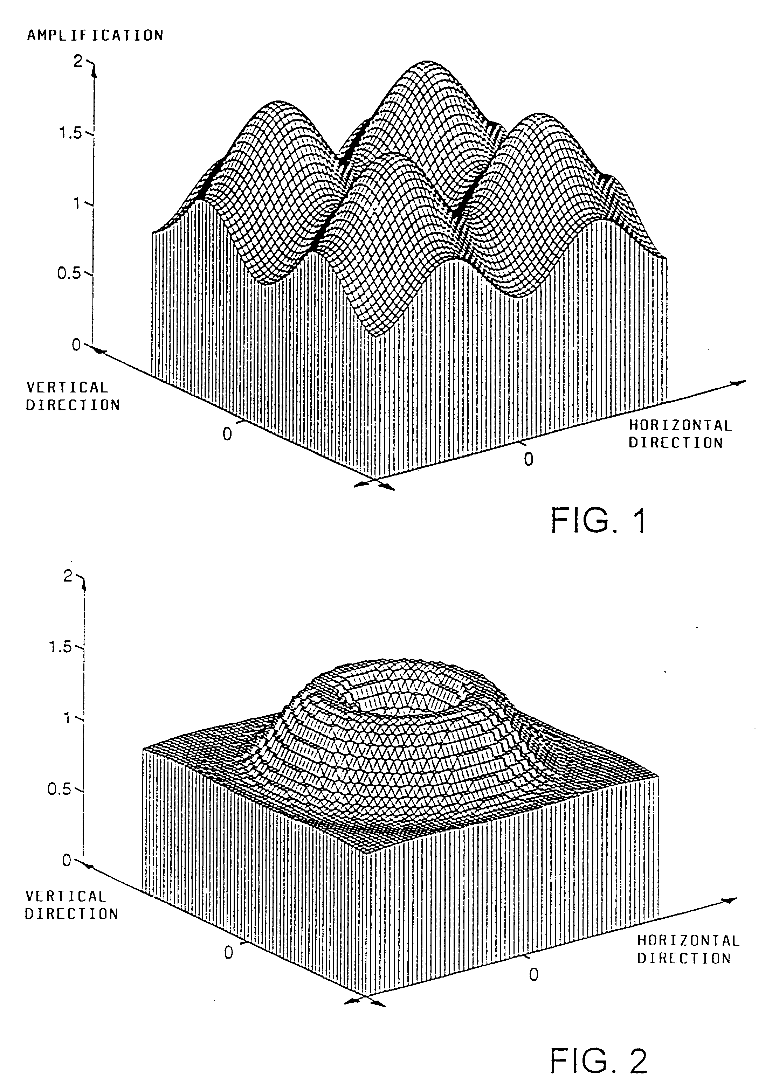

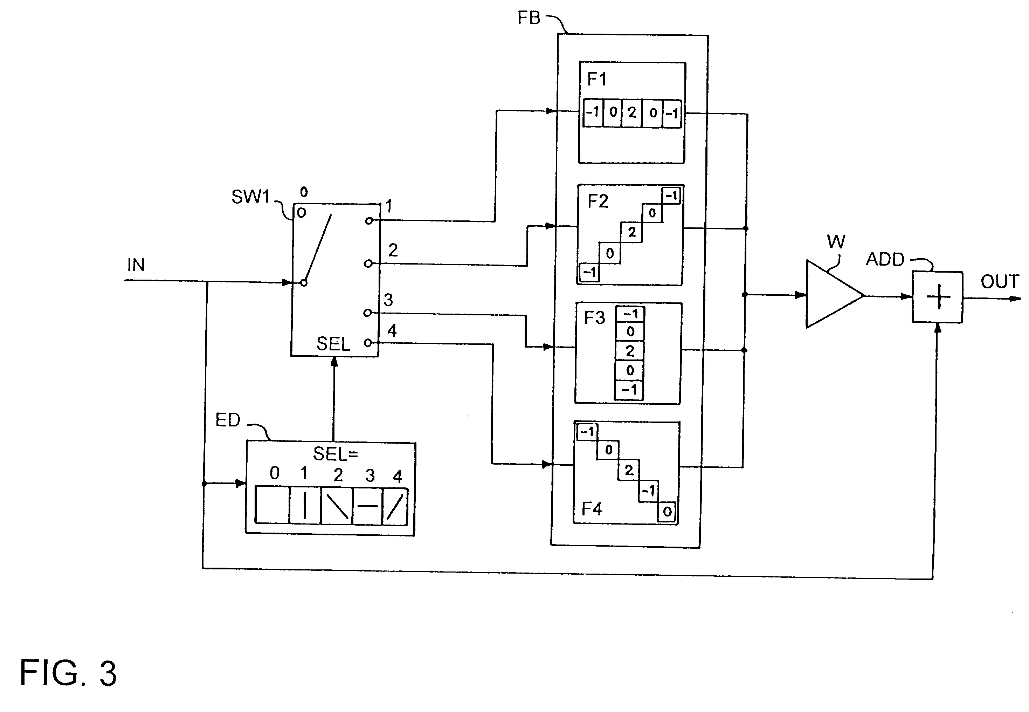

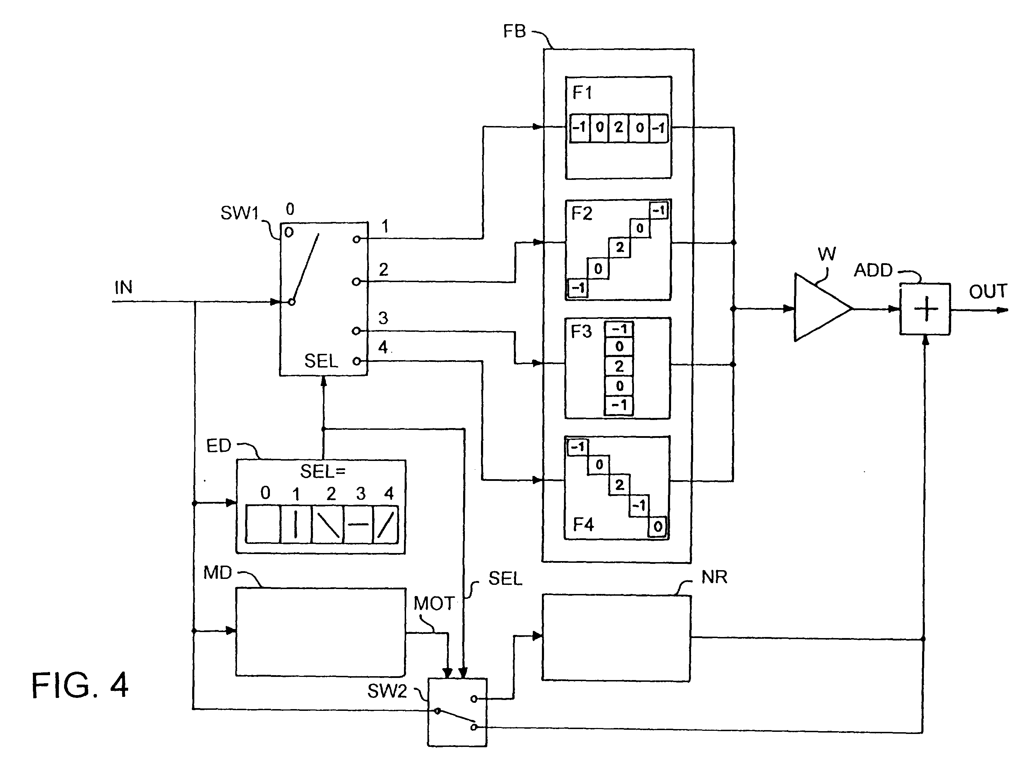

Fig. 1 shows the frequency response obtained when edge emphasizing is performed using two unidimensional filters. The horizontal axes represent horizontal and vertical directions and they have zeroes marked on them; when moving to either direction from the zero of an axis, the horizontal or vertical frequency grows. Growing diagonal frequencies are represented by the diagonal directions starting from the zero frequency point in the middle of the response diagram. The vertical axis represents the amplification in the embodiment (Figs. 3 and 4), wherein a signal, weighted by a coefficient and taken through an edge emphasizing filter, is added to the signal. The figure illustrates how such a filter especially emphasizes medium frequency components in diagonal directions.

Fig. 2 shows in the same manner as Fig. 1 the frequency response obtained using an ideal edge emphasizing filter that has the same bandpass response in all directions. In practice, this filtering, which comes near to the ideal frequency response, is performed so that the filtering is always unidimensional and the filtering direction or window is selected such that it is perpendicular or substantially perpendicular to the direction of the edge detected. The filter applied is selected from a filter bank that contains a required number of filters of different directions. The preferred embodiment of the invention employs four filtering directions, whereby diagonal directions are used in addition to the horizontal and vertical dimensions. Thus, the filtering directions to be selected are 0°, 45°, 90° and 135°.

Fig. 3 is a diagrammatic illustration of an embodiment of the edge emphasizing arrangement according to the invention. An incoming video signal IN is first directed past the edge emphasizing arrangement directly to an adder ADD preceding the output, secondly to a controllable switch SW1, and thirdly to an edge detection block ED, which in this embodiment by means of a window used in the detection detects for each sample whether it is an edge sample, and when an edge is detected, detects, of four possible alternatives, the direction that is closest to the edge direction. The edge detector may be one disclosed in the applicant's patent document FI-91029, which uses a 3*3 sample window. Switch SW1, to which the incoming video signal is also directed, receives a control signal SEL from the edge detection block ED. As shown in block ED, control signal SEL drives switch SW1 to position 0, or open, if there is no edge in the window, and if there is an edge in the window, to position 1 if detected edge direction is 90°, position 2 if detected direction is 135°, position 3 if detected direction is 0°, and position 4 if detected direction is 45°. If no edge is detected, incoming signal IN becomes also the arrangement's output signal OUT as it is taken to the output of the arrangement via the adder ADD. If an edge is detected, switch SW1 directs the incoming signal, according to the direction alternatives and corresponding switch positions 1, 2, 3, 4 to one of the edge emphasizing filters F1, F2, F3, F4 selected from the filter bank FB so that the direction of the unidimensional filtering window used for edge emphasizing is perpendicular to the detected direction of the edge. Hence, if alternative 2, or 135°, is detected in block ED as the direction closest to the edge direction, control signal SEL drives switch SW1 to position 2, and filter F2 of the filter bank FB is applied to the incoming signal, whereby the direction of the filtering window is 45°. After edge emphasizing the signal is taken via an amplification or weighting block W to the adder ADD to be summed with the signal brought to it directly from the input. By means of the weighting block W the emphasized samples from the emphasizing filter can be weighted relative to the samples of the original signal to which they are added, and thus change the intensity of the emphasis without changing the filtering parameters. Suitable weighting produces a natural sharpness effect. The unidimensional emphasizing filters in the embodiment example of Fig. 3 are linear FIR filters employing a five-sample window and having filter coefficients of (-1 0 2 0 -1), whereby the sample to be emphasized is weighted in the filter by coefficient 2, the adjacent samples at either side in the filtering direction are ignored, and the samples following those, in the filtering direction, are weighted by coefficient -1. Note that even though the edge emphasizing filters are linear, the edge emphasizing operation as a whole is non-linear because it is applied only at detected edge samples.

It is clear to one skilled in the art that the unidimensional emphasizing filters in the filter bank FB may also be different from those described in the embodiment example. It is not necessary that all filters be identical with respect to, say, window extent or coefficients, although it is the preferred embodiment as regards the evenness of edge emphasizing. There may be more than the four filters shown in Fig. 3, that use different filtering directions, but it is clear that it is advantageous to proportion the number of filter alternatives to that number of direction alternatives that can be detected in the edge detection. As the edge detection block ED in Fig. 3 can only detect four different directions, it is natural that the filter bank contains four different filters. For example, the applicant's Finnish patent FI-89995, which relates to edge adaptive interpolation of a video picture, discloses in conjunction with interpolation a method and an arrangement whereby one of nine different directions can be detected as the edge direction in a 6x3 window. In principle, a corresponding method and arrangement can be applied in the method and arrangement according to the present invention and thus realize a filter bank wherein a filter can be selected, corresponding to the nine different directions, the filtering direction of which is as perpendicular as possible to the detected edge direction.

Fig. 4 is a block diagram that schematically illustrates an embodiment wherein motion detection and edge and motion adaptive noise reduction are added to the edge emphasizing arrangement according to the invention. Now the incoming signal IN is taken also to a motion detector MD. The motion detector produces signal MOT which together with signal SEL from the edge detector drives switch SW2, which connects the incoming video signal directly to the adder ADD if said signals MOT and SEL detect an occurrence of either an edge or motion. If MOT detects no motion and SEL detects no edge, the incoming video signal is connected to the adder ADD and further as the output signal OUT via a noise reduction block NR. No signal comes to the adder ADD via the filter block FB because switch SW1 is driven to position 0 when no edge occurs. The motion detector MD may be e.g. the motion detector disclosed in an earlier application FI-942752 by the applicant.

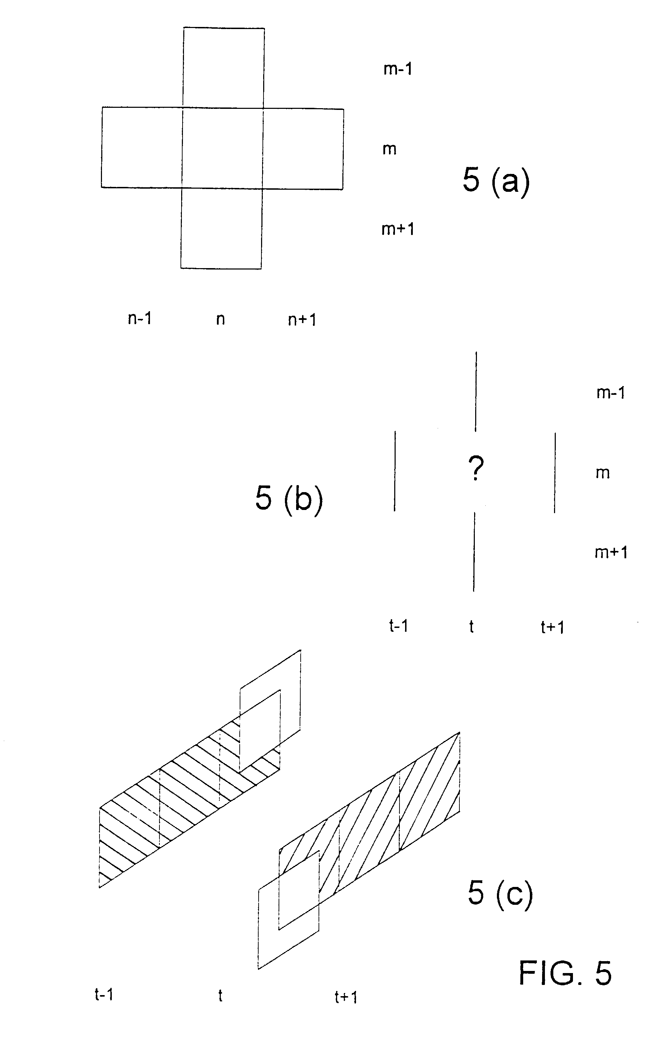

Fig. 5 depicts a possible operating environment of a spatiotemporal noise reduction algorithm. Fig. 5(a) shows the locations of the samples included in the algorithm, Fig. 5(b) illustrates the temporal relation of the samples to the sample processed, indicated by a question mark, and Fig. 5(c) is a perspective depicting the sample environment as a whole in space-time. An algorithm operating in the environment depicted in Fig. 5 could be, for example, as follows:

$$y(m,n,t) = [y(m-1,n,t) + y(m,n-1,t-1) + y(m,n,t-1) + y(m,n+1,t-1) +$$

$$y(m,n-1,t+1) + y(m,n,t+1) + y(m,n+1,t+1) + y(m+1,n,t)] / 8,$$

where $y(m,n,t)$ is the sample processed in pixel position n, field t of line m, and m-1 and m+1 represent the lines above and below line m, n-1 and n+1 represent the preceding and next pixel position in relation to pixel position n, and t-1 and t+1 represent the previous and next field in time in relation to field t.

In principle, it is possible to reduce noise also in an edge area by averaging the picture area in the direction of the edge. Then, the edge area would be filtered prior to edge emphasizing filtering using a filter in the direction of the edge detected. This would level off the strongest noise spots in the edge area and prevent them from being further emphasized in edge emphasizing. The edge emphasizing arrangement according to the invention would then require, prior to block FB, a corresponding noise reduction block which would comprise several filters averaging in different directions, and the filter that would be closest to the edge direction would be selected. In that case, too, an alternative would be a bigger spatiotemporal filter mask which would be used for static and non-edge locations. Naturally, it is possible to perform a general noise reduction covering also the edge samples before edge emphasizing, whereby an edge emphasizing block realizing the corresponding noise reduction algorithm would be located on the signal path suitably before the edge emphasizing block. These alternative embodiments of the invention are not illustrated in the drawing.

It is clear to one skilled in the art that Figs. 3 and 4 illustrate the arrangement according to the invention only schematically and in principle and that in practice the arrangement will not include physical elements corresponding to blocks ED, SW1 and FB of Fig. 3 or further to blocks MD, SW2 and NR of Fig. 4, but the corresponding functions will be primarily implemented by means of a digital signal processor and its peripheral circuits. Furthermore, the block diagrams of Figs. 3 and 4 describe only those blocks that are necessary to illustrate the invention. The implementation of edge emphasizing filtering and edge detection described above requires e.g. line or field memories, which, however, are not included in the drawing.

As regards the operation of the method and arrangement according to the invention it is important that the occurrence and direction of an edge can be detected. For the embodiment examples depicted in Figs. 3 and 4, a relatively simple algorithm which detects four different direction alternatives is enough. That can be provided by the arrangement using a 3x3 window disclosed in the applicant's patent document FI-91029 mentioned above or by an edge detection method used in conjunction with direction dependent median filtering (DDMF) proposed by Doyle et al., which is well known to persons skilled in the art and which will not be described here in more detail. Above it was also referred to a little more complex edge detection method and arrangement which detects more direction alternatives and which is disclosed in the applicant's patent FI-89995, and also other arrangements for detecting the location and direction of an edge are known in the art. Thus, a person skilled in the art has sufficiently information available to realize edge detection capable of the required operation and, therefore, edge detection will not be described in greater detail in this description.

One skilled in the art will also appreciate that edge emphasizing according to the invention may be combined with the processing of a video picture, in the form of a digital signal, in many other ways than those described above. For example, it may be used in conjunction with interpolation, such as interlaced-to-progressive conversion (IPC). However, the edge emphasizing method and arrangement according to the invention are intended primarily to be used in a receiver, after the rest of the signal processing, for the purpose of improving the picture quality. The edge emphasizing and the parameters used in edge emphasizing may be selected by the viewer of the video picture or, on the other hand, the edge emphasizing and its parameters may be controlled internally in the signal processing according to the characteristics of the signal.

Claims

1. A method for processing a digital video signal comprising samples corresponding to pixels to emphasize edges appearing in a video picture corresponding to the video signal, which includes stages in which

several unidimensional edge emphasizing algorithms for different directions are reserved for signal processing so that they represent substantially all possible directions,

edge occurrence is detected at each sample and when an edge occurs, its direction is detected,

when an edge occurs, a unidimensional edge emphasizing algorithm is selected the direction of which is closest to the perpendicular direction of the edge, and edge emphasizing is performed with the algorithm selected and which is characterized in that it also includes stages in which

the occurrence of motion is detected at each sample,

noise reduction is performed using a first noise reduction algorithm if neither an edge nor motion occurs.

2. The method of claim 1, **characterized** in that four unidimensional edge emphasizing algorithms are reserved for signal processing, the directions of which substantially cover at regular intervals all possible directions.

3. The method of claim 1 or 2, **characterized** in that the edge emphasizing algorithm is a bandpass type unidimensional FIR filter.

4. The method of any one of claims 1 to 3, **characterized** in that

several unidimensional second noise reduction algorithms for different directions are reserved for signal processing so that they represent all possible directions, and

if no motion but an edge occurs, that second noise reduction algorithm which is closest to the edge direction is selected, and it is used to perform the noise reduction prior to edge emphasizing.

5. The method of any one of claims 1 to 4, **characterized** in that the first noise reduction algorithm is an averaging spatiotemporal noise reduction algorithm.

6. An arrangement for processing a digital video signal comprising samples corresponding to pixels to emphasize an edge appearing in a video picture corresponding to the video signal, including an edge detection means (ED) which detects at each sample the occurrence of an edge and the direction of the edge when it occurs, said arrangement comprising

for different directions a set (FB) of unidimensional edge emphasizing filters (F1, F2, F3, F4) which represent substantially all possible directions,

a means (SW1) for selecting from the set (FB) of edge emphasizing filters an edge emphasizing filter as a response to a control signal (SEL), received from the edge detection means (ED), corresponding to the occurrence and direction of an edge, so that when an edge occurs, an edge emphasizing filter (F1, F2, F3, F4) is selected that has a direction which is closest to the perpendicular direction of the detected edge, and the filtering is performed using the selected filter and characterized in that it further comprises

a means (MD) for detecting motion at each sample,

a noise reduction filter (NR) and

a means (SW2) for coupling the video signal (IN) coming to the arrangement to travel via a first noise reduction filter (NR) to serve as the signal (OUT) leaving the arrangement, if neither an edge nor motion is detected at the sample.

7. The arrangement of claim 6 for processing a digital video signal, **characterized** in that the set (FB) of unidimensional edge emphasizing filters for different directions comprises four filters (F1, F2, F3, F4) covering at regular intervals all possible directions.

8. The arrangement of claim 6 or 7 for processing a digital video signal, **characterized** in that the edge emphasizing filters are bandpass type unidimensional FIR filters.

9. The arrangement of any one of claims 6 to 8 for processing a digital video signal, **characterized** in that it further comprises a means (ADD) for adding the emphasized video signal to the video signal (IN) coming to the arrangement in order to produce a video signal (OUT) leaving the arrangement.

10. The arrangement of claim 9 for processing a digital video signal, **characterized** in that it also comprises a means (W) for weighting the emphasized video signal before adding it to the video signal (IN) coming to the arrangement.

11. The arrangement of claim 6 for processing a digital video signal, **characterized** in that the noise reduction filter (NR) is an averaging spatiotemporal noise reduction filter.

**Patentansprüche**

1. Verfahren zur Verarbeitung eines digitalen Videosignals, umfassend Proben, die Bildpunkten entsprechen, um Kanten hervorzuheben, die in einem Videobild erscheinen, das dem Videosignal entspricht, wobei das Verfahren Verfahrensschritte beinhaltet, in denen

   mehrere eindimensionale Kantenhervorhebungsalgorithmen für verschiedene Richtungen für die Signalverarbeitung reserviert sind, so daß sie im wesentlichen alle möglichen Richtungen repräsentieren,
   bei jeder Probe das Auftreten einer Kante geprüft und bei Auftreten einer Kante deren Richtung festgestellt wird,
   bei Auftreten einer Kante ein eindimensionaler Kantenhervorhebungsalgorithmus ausgewählt wird, dessen Richtung der lotrechten Richtung der Kante am nächsten liegt, und Kantenhervorhebung mit dem gewählten Algorithmus durchgeführt wird, und das dadurch gekennzeichnet ist, daß es auch Verfahrensschritte beinhaltet, in denen
   das Auftreten von Bewegung an jeder Probe geprüft wird und
   Rauschunterdrückung mit einem ersten Rauschunterdrückungsalghorithmus durchgeführt wird, wenn weder eine Kante noch Bewegung auftritt.

2. Verfahren nach Anspruch 1, dadurch gekennzeichnet, daß vier eindimensionale Kantenhervorhebungsalgorithmen für die Signalverarbeitung reserviert sind, deren Richtungen in regelmäßigen Abständen alle möglichen Richtungen im wesentlichen abdecken.

3. Verfahren nach Anspruch 1 oder 2, dadurch gekennzeichnet, daß der Kantenhervorhebungsalgorithmus ein eindimensionales Bandpaß-FIR-Filter ist.

4. Verfahren nach einem der Ansprüche 1 bis 3, dadurch gekennzeichnet, daß

   mehrere eindimensionale zweite Rauschunterdrückungsalgorithmen für verschiedene Richtungen für die Signalverarbeitung reserviert sind, so daß sie alle möglichen Richtungen repräsentieren, und
   wenn keine Bewegung, aber eine Kante auftritt, derjenige zweite Rauschunterdrückungsalgorithmus, der der Kantenrichtung am nächsten liegt, ausgewählt und dazu verwendet wird, die Rauschunterdrückung vor der Kantenhervorhebung durchzuführen.

5. Verfahren nach einem der Ansprüche 1 bis 4, dadurch gekennzeichnet, daß der erste Rauschunterdrückungsalgorithmus ein mittelwertbildender räumlich-zeitlicher Rauschunterdrückungsalgorithmus ist.

6. Anordnung zum Verarbeiten eines digitalen Videosignals, umfassend Proben, die Bildpunkten entsprechen, um eine Kante hervorzuheben, die in einem Videobild erscheint, das dem Videosignal entspricht, mit einem Kantenerfassungsmittel (ED), das an jeder Probe das Auftreten einer Kante und die Richtung der Kante bei deren Auftreten erfaßt, wobei die genannte Anordnung folgendes umfaßt:

   für verschiedene Richtungen einen Satz (FB) von eindimensionalen Kantenhervorhebungsfiltern (F1, F2, F3, F4), die im wesentlichen alle möglichen Richtungen repräsentieren,
   ein Mittel (SW1) zum Auswählen eines Kantenhervorhebungsfilters aus dem Satz (FB) von Kantenhervorhebungsfiltern als Reaktion auf ein Steuersignal (SEL), das von dem Kantenerfassungsmittel (ED) empfangen wird und das Auftreten und Richtung einer Kante entspricht, so daß beim Auftreten einer Kante ein Kantenhervorhebungsfilter (F1, F2, F3, F4) ausgewählt wird, das eine Richtung hat, die der lotrechten Richtung der erfaßten Kante am nächsten liegt, und die Filterung mit dem ausgewählten Filter erfolgt, und dadurch gekennzeichnet, daß sie ferner folgendes umfaßt:
   ein Mittel (MD) zum Erfassen von Bewegung an jeder Probe,
   ein Rauschunterdrückungsfilter (NR) und
   ein Mittel (SW2) zum Koppeln des an der Anordnung ankommenden Videosignals, so daß es über ein erstes Rauschunterdrückungsfilter (NR) läuft, um als das die Anordnung verlassende Signal (OUT) zu dienen, wenn an der Probe weder eine Kante noch Bewegung erfaßt wird.

7. Anordnung nach Anspruch 6 zur Verarbeitung eines digitalen Videosignals, dadurch gekennzeichnet, daß der Satz (FB) von eindimensionalen Kantenhervorhebungsfiltern für verschiedene Richtungen vier Filter (F1, F2, F3, F4) umfaßt, die in regelmäßigen Abständen alle möglichen Richtungen abdecken.

8. Anordnung nach Anspruch 6 oder 7 zur Verarbeitung eines digitalen Videosignals, dadurch gekennzeichnet, daß die Kantenhervorhebungsfilter eindimensionale Bandpaß-FIR-Filter sind.

9. Anordnung nach einem der Ansprüche 6 bis 8 zur Verarbeitung zur Verarbeitung eines digitalen Videosignals, dadurch gekennzeichnet, daß sie ferner ein Mittel (ADD) zum Addieren des hervorgehobenen Videosignals mit dem an der Anordnung eingehenden Videosignal (IN) umfaßt, um ein die Anordnung verlassendes Videosignal (OUT) zu erzeugen.

10. Anordnung nach Anspruch 9 zur Verarbeitung eines digitalen Videosignals, dadurch gekennzeichnet, daß sie auch ein Mittel (W) zum Bewerten des hervorgehobenen Videosignals umfaßt, bevor es zu dem an der Anordnung eingehenden Videosignal (IN) addiert wird.

11. Anordnung nach Anspruch 6 zur Verarbeitung eines digitalen Videosignals, dadurch gekennzeichnet, daß das Rauschunterdrückungsfilter (NR) ein mittelwertbildendes räumlich-zeitliches Rauschunterdrückungsfilter ist.

**Revendications**

1. Procédé pour traiter un signal vidéo numérique comprenant des échantillons correspondant à des pixels permettant d'accentuer les bords apparaissant dans une image vidéo qui correspond au signal vidéo, qui inclut les étapes au cours desquelles

   plusieurs algorithmes d'accentuation de bord unidimensionnels pour différentes directions sont réservés au traitement du signal de telle sorte qu'ils représentent sensiblement toutes les directions possibles, une apparition de bord est détectée à chaque échantillon et, lorsque qu'un bord apparaît, sa direction est détectée, lorsqu'un bord apparaît, un algorithme d'accentuation de bord unidimensionnel est sélectionné, dont la direction est la plus proche de la direction perpendiculaire du bord, et l'accentuation du bord s'accomplit avec l'algorithme sélectionné, et qui est caractérisé en ce qu'il inclut également les étapes au cours desquelles l'apparition d'un mouvement est détectée à chaque échantillon, une réduction du bruit s'accomplit en employant un premier algorithme de réduction de bruit lorsque, ni un bord, ni un mouvement n'apparaissent.

2. Procédé selon la revendication 1, caractérisé en ce que quatre algorithmes d'accentuation de bord unidimensionnels sont réservés au traitement du signal, dont les directions couvrent sensiblement, selon des intervalles réguliers, toutes les directions possibles.

3. Procédé selon la revendication 1 ou 2, caractérisé en ce que l'algorithme d'accentuation de bord est un filtre FIR (à réponse impulsionnelle finie) unidimensionnel du type passe-bande.

4. Procédé selon l'une quelconque des revendications 1 à 3, caractérisé en ce que

   plusieurs seconds algorithmes de réduction de bruit unidimensionnels pour différentes directions sont réservés au traitement du signal de telle sorte qu'ils représentent sensiblement toutes les directions possibles, et lorsqu'aucun mouvement n'apparaît mais qu'un bord apparaît, ce second algorithme de réduction de bruit qui est le plus proche de la direction du bord est sélectionné, et il est employé pour accomplir la réduction de bruit avant l'accentuation du bord.

5. Procédé selon l'une quelconque des revendications 1 à 4, caractérisé en ce que le premier algorithme de réduction de bruit est un algorithme de réduction de bruit spatiotemporel de moyennage.

6. Montage pour traiter un signal vidéo numérique comprenant des échantillons correspondant à des pixels permettant d'accentuer les bords apparaissant dans une image vidéo qui correspond au signal vidéo, incluant un moyen de détection de bord (ED) qui détecte à chaque échantillon l'apparition d'un bord et la direction du bord lorsqu'il

# EP 0 717 557 B1

apparaît, ledit montage comprenant

pour différentes directions, un ensemble (FB) de filtres d'accentuation de bord unidimensionnels (F1, F2, F3, F4) qui représentent sensiblement toutes les directions possibles,

un moyen (SW1) destiné à sélectionner, parmi l'ensemble (FB) de filtres d'accentuation de bord, un filtre d'accentuation de bord en réponse à un signal de commande (SEL), reçu en provenance du moyen de détection de bord (ED), correspondant à l'apparition et à la direction d'un bord, de sorte que lorsqu'un bord apparaît, un filtre d'accentuation de bord (F1, F2, F3, F4) est sélectionné, qui a une direction la plus proche de la direction perpendiculaire du bord détecté, le filtrage s'accomplissant en employant le filtre sélectionné et caractérisé en ce qu'il comprend, en outre

un moyen (MD) destiné à détecter un mouvement à chaque échantillon,

un filtre de réduction de bruit (NR), et

un moyen (SW2) destiné à coupler le signal vidéo (IN) arrivant dans le montage pour qu'il soit transmis via un premier filtre de réduction de bruit (VR) afin de servir de signal (OUT) quittant le montage lorsque, ni un bord, ni un mouvement n'apparaissent.

7. Montage selon la revendication 6, pour traiter un signal vidéo numérique, caractérisé en ce que l'ensemble (FB) de filtres d'accentuation de bord unidimensionnels pour différentes directions comprend quatre filtres (F1, F2, F3, F4) couvrant, selon des intervalles réguliers, toutes les directions possibles.

8. Montage selon la revendication 6 ou 7, pour traiter un signal vidéo numérique, caractérisé en ce que les filtres d'accentuation de bord sont des filtres FIR unidimensionnels du type passe-bande.

9. Montage selon l'une quelconque des revendications 6 à 8, pour traiter un signal vidéo numérique, caractérisé en ce qu'il comprend, en outre, un moyen (ADD) destiné à additionner le signal vidéo accentué au signal vidéo (IN) arrivant dans le montage de manière à produire un signal de sortie (OUT) quittant le montage.

10. Montage selon la revendication 9, pour traiter un signal vidéo numérique, caractérisé en ce qu'il comprend également un moyen (W) destiné à pondérer le signal vidéo accentué avant de l'additionner au signal vidéo (IN) arrivant dans le montage.

11. Montage selon la revendication 6, pour traiter un signal vidéo numérique, caractérisé en ce que le filtre de réduction de bruit (NR) est un filtre de réduction de bruit spatiotemporel de moyennage.

AMPLIFICATION

FIG. 1

FIG. 2

FIG. 3

EP 0 717 557 B1

FIG. 4

EP 0 717 557 B1

m-1

m

5 (a)

m+1

n-1    n    n+1

m-1

?    m

5 (b)

m+1

t-1    t    t+1

5 (c)

FIG. 5

t-1    t    t+1